(19) Europäisches Patentamt / European Patent Office / Office européen des brevets

(11) **EP 3 960 557 B1**

(12) **EUROPEAN PATENT SPECIFICATION**

(45) Date of publication and mention of the grant of the patent:
**08.11.2023 Bulletin 2023/45**

(21) Application number: **20193984.0**

(22) Date of filing: **01.09.2020**

(51) International Patent Classification (IPC):
*B60T 17/22* (2006.01)      *F16D 66/02* (2006.01)

(52) Cooperative Patent Classification (CPC):
**B60T 17/228; F16D 66/02;** F16D 2066/006

(54) **WEAR ESTIMATOR DEVICE AND WEAR ESTIMATOR METHOD FOR A BRAKE PAD**

VERSCHLEISSSCHÄTZVORRICHTUNG UND VERSCHLEISSSCHÄTZVERFAHREN FÜR EINEN BREMSBELAG

DISPOSITIF D'ESTIMATION D'USURE ET PROCÉDÉ ESTIMATEUR D'USURE D'UNE PLAQUETTE DE FREIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.03.2022 Bulletin 2022/09**

(73) Proprietor: **KNORR-BREMSE Systeme für Schienenfahrzeuge GmbH 80809 München (DE)**

(72) Inventors:
• **KREMER, Miklos 1215 Budapest (HU)**
• **SZEKELY, Ferenc 2381 Táborfalva (HU)**

(56) References cited:
**DE-A1-102018 117 082      DE-A1-102018 121 115 US-A1- 2006 131 950**

**Description**

The invention relates to a wear estimator device and a wear estimator method for a brake pad, in particular to such a wear estimator device and a wear estimator method considering temperature profiles.

Current rail vehicles are equipped with wheel brake systems. Usually, these wheel brake systems convert kinetic energy of the rail vehicle into heat by friction between a brake pad and a friction surface like an outer wheel circumference, an inner drum circumference or a braking disc rotating conjointly with a wheel of the rail vehicle. In such wheel brake systems, brake pads and friction surfaces are subject to wear and that have to be replaced when worn out. Currently, brake wear inspection of rail vehicles is scheduled on the basis of service time or service mileage. During wear inspection, the remaining life time of the involved parts is estimated on the usage mode. The usage may be characterized by the trains's timetable or the train type. The timetable provides information on the braking frequency and the train velocity. Under train type it is understood a local train, intercity train or a long distance train that exhibit different brake stress levels due to different speed envelopes and amounts of stops.

It is known that brake pads of friction brakes has a different wear velocity under different operational circumstances. For example, brake pads have a threshold of a maximal continuous application temperature and a threshold of maximal short time application temperature. If these thresholds are exceeded, the bonding resin contained in the brake pads may be damaged and causing therefore a permanently higher average pad wear during the following brakings. Document DE 10 2016 115275 A1 proposes a brake diagnostic device that comprises a sensor for detecting a current temperature of an environment of the brake and a brake disc friction temperature warning device to output a signal when the current temperature of the brake disc friction surface reaches a predetermined brake disc friction temperatur limit.

These operational circumstances usually are not considered in the individual brake wear estimation. This has as a consequence that parts of the braking system have to be replaced early or service intervals have to be scheduled in shorter intervals to account for unconsidered possible faster wear.

For example, DE 10 2018 117082 A1 discloses technical solutions for determining the thickness of a vehicle brake rotor. An exemplary method includes providing vehicle parameters that identify the operating conditions of a vehicle and use vehicle parameters to determine the work done by a brake of the vehicle as braking work. Further, the method includes using the braking work to determine the brake rotor temperature and using the brake rotor temperature to determine the brake rotor wear. The method further includes accumulating the brake rotor wear to provide an estimate of the thickness of the vehicle brake rotor. This document thus discloses a wear estimator device for an element of a friction based braking device, comprising an on-board computing capacity device configured to conduct arithmetic calculations and to be arranged at a vehicle, the on-board computing capacity device being connectable to the friction based brake device.

It is an object of the present invention to provide a wear estimator device and wear estimator method for a brake pad that eliminates the detriments of the related art and allows a more accurate estimation of the future life time of parts of a wheel brake system.

The object is solved by a wear estimator device according to claim 1 and a wear estimator method according to claim 11. Advantageous further developments are subject-matter of the dependent claims.

Several different wear estimation models are possible:

1. Wear estimation considering the average wear alone.

A first way of calculating wear is based on the assumption of proportionality of the brake pad wear and the dissipated energy during braking. The wear coefficients are given on information sheets of the manufacturer (concerning a UIC determined series of braking), or can be measured on a dynamometer using the planned timetable. The dissipated braking energy on friction brake can be summarised online if cylinder pressure and speed is measured and processed in an onboard computer such as a brake control unit (BCU) or wheel slip protection device (WSP).

2. Wear estimation considering speed, temperature or normal forces

A further improved wear estimation model takes into account the speed or the temperature or the normal force dependent friction conditions. A more accurate wear calculation is possible by taking into account the dependence of the brake pad wear coefficient on the pad surface temperature and the sliding speed, instead of using a single constant (like in item 1). In order to achieve this improvement, the pad surface temperatures must be known. These temperatures are usually hard to measure, but can be estimated from the measured brake cylinder pressures and wheel speeds using a simple pad-disc thermal model.

2a. Wear estimation considering changes in brake pad friction coefficient

A modification of the model 2 additionally takes into account the generally small changing in pad friction coefficient (COF). In this case, the friction power and the heating process can be computed in a more accurate way. Temperature depending wear coefficients can be determined using dynamometer measurements and stored in a lookup table or expressed as a mathematical function ($w(T)$ or $w(T,v)$ or $w(T,v,Fb)$) ($T$, $V$, $Fb$ are considered as "tribological state vector").

3. Wear estimation considering the history of brake pad state

A further improvement of wear estimation of point 2 and 2a is also considering the time-history of the state of the brake pad, especially temperature and structural state. Brakings, when pad temperatures reach the range what is defined by the pad manufacturer as *"maximal continuous application temperature"* cause weakening in bonding resin of the brake pad. After such a braking, the pad-disc friction coefficient is still appropriate, but a much more increased wear coefficient must be expected for at least until this weakened layer wears down. This means, that using methods described in 2 and 2a needs a temporarily increased wear coefficient after such an event, i.e. after such an event, multiplying of the wear coefficient with a predetermined factor can be applied.

Disclosed is a wear estimator device for an element of a friction based braking device, comprising an on-board computing capacity device configured to conduct arithmetic calculations and to be arranged at a vehicle, the on-board computing capacity device being connectable to the friction based brake device, wherein the on-board computing capacity device comprises: a wear factor estimation unit that is configured to determine a wear coefficent ($w_{factorised}$) based on properties of the operational circumstances of the friction based brake device, and a wear integrator unit that is configured to determine a wear *(W(t))* of an element of the brake device under consideration of the wear coefficient ($w_{factorised}$) determined by the wear factor estimation unit.

Disclosed is that advantageously, the on-board computing capacity device is a brake control unit or a wheel slide prevention unit.

Disclosed is that advantageously the element of the brake device is a brake pad, a brake disc or any other element holding a friction surface of a brake device.

Disclosed is that advantageously the on-board computing capacity device further comprises a brake element temperature estimation unit that is configured to determine a temperature ($T_{pad}$) of an element of the braking device and the wear factor estimation unit is configured to determine the wear coefficient ($w_{factorised}$) based on the temperature ($T_{pad}$) determined by the brake element temperature estimation unit.

Disclosed is that advantageously the on-board computing capacity device further comprises a braking power determination unit that is configured to determine a braking power $P(t)$ and the wear integrator unit is configured to determine a wear *(W(t))* of an element of the brake device under consideration of the wear coefficient ($w_{factorised}$) determined by the wear factor estimation unit and the braking power *(P(t))* determined by the braking power determination unit.

Disclosed is that advantageously the braking power determination unit is configured to determine the braking power *P(t)* based on the normal force ($F_b$) applied to the elements of the friction based brake device or the velocity ($V_f$) of several elements of the brake device relative to each other.

Disclosed is that advantageously the wear factor estimation unit is configured to determine the wear coefficient ($w_{factorised}$) based on the temperature ($T_{pad}$) determined by the brake element temperature estimation unit, the normal force ($F_b$) applied to the elements of the friction based brake device or the velocity ($V_f$) of the elements of the brake device relative to each other.

Disclosed is that advantageously the brake element temperature estimation unit is configured to determine the temperature ($T_{pad}$) of the element of the braking device based on the normal force ($F_b$) applied to the elements of the friction based brake device, the velocity ($V_f$) of the elements of the brake device relative to each other, or the ambient temperature ($T_{ambient}$).

Disclosed is that advantageously the on-board computing capacity device further comprises a temperature-friction-coefficient estimator unit and the temperature-friction-coefficient estimator unit comprises the brake element temperature estimation unit and a brake element friction estimation unit that is configured to determine a current friction coefficient ($\mu_0$) of the elements of the brake device, wherein the brake element temperature estimation unit is configured to determine the temperature ($T_{pad}$) of the element of the braking device based on the normal force ($F_b$) applied to the elements of the friction based brake device, the velocity ($V_f$) of the elements of the brake relative to each other, the ambient temperature ($T_{ambient}$), or the current friction coefficient ($\mu_0$) of the elements of the brake device, or the braking power determination unit is configured to determine the braking power $P(t)$ based on the normal force ($F_b$) applied to the elements of the friction based brake device, the velocity ($V_f$) of several elements of the brake device relative to each other, or the current friction coefficient ($\mu_0$) of the elements of the brake device.

Disclosed is a vehicle comprising the wear estimator device of any of the preceding sections.

Disclosed is a wear estimator method for an element of a friction based braking device, the method comprising the steps: determining a wear coefficent ($w_{factorised}$) based on properties of the operational circumstances of the friction based brake device and determining a wear ($W(t)$) of an element of the brake device under consideration of the wear coefficient ($w_{factorised}$) determined by the wear factor estimation unit, wherein the method steps are accomplished by an on-board computing capacity device configured to conduct arithmetic calculations and to be arranged at a vehicle, the on-board computing capacity device (15, 16) being connectable to the friction based brake device.

Disclosed is that advantageously, the method further comprises the step: determining a temperature ($T_{pad}$) of an element of the braking device, wherein the wear coefficient ($w_{factorised}$) determination is based on the temperature ($T_{pad}$).

Disclosed is that advantageously, the method further comprises the step: determining a braking power $P(t)$ of the brake device, wherein the determination of a wear ($W(t)$) of the element of the brake device is applied under consideration of the wear coefficient ($w_{factorised}$) determined in the wear factor estimation step and the braking power ($P(t)$) determined in the braking power determination step.

Disclosed is that advantageously, the method further comprises the step: determining a brake element friction coefficient ($\mu_0$) of the elements of the brake device, wherein the brake element temperature estimation step determines the temperature ($T_{pad}$) of the element of the braking device based on the normal force ($F_b$) applied to the elements of the friction based brake device, the velocity ($V_f$) of the elements of the brake relative to each other, the ambient temperature ($T_{ambient}$), or the current friction coefficient ($\mu_0$) of the elements of the brake device, or

the braking power determination step determines the braking power $P(t)$ based on the normal force ($F_b$) applied to the elements of the friction based brake device (13, 14), the velocity ($V_f$) of several elements of the brake device relative to each other, or the current friction coefficient ($\mu_0$) of the elements of the brake device.

Below, the invention is elucidated by means of embodiments referring to the attached drawings.

Fig. 1 exhibits a rail vehicle having a brake system according to the invention.

Fig. 2 exhibits a wear calculation module according to the invention.

Fig. 3 exhibits a modification of the wear calculation module of Fig. 2.

Fig. 4 exhibits a diagram showing application of an increased wear coefficient.

Fig. 5 exhibits a modification of the wear calculation module of Fig. 3.

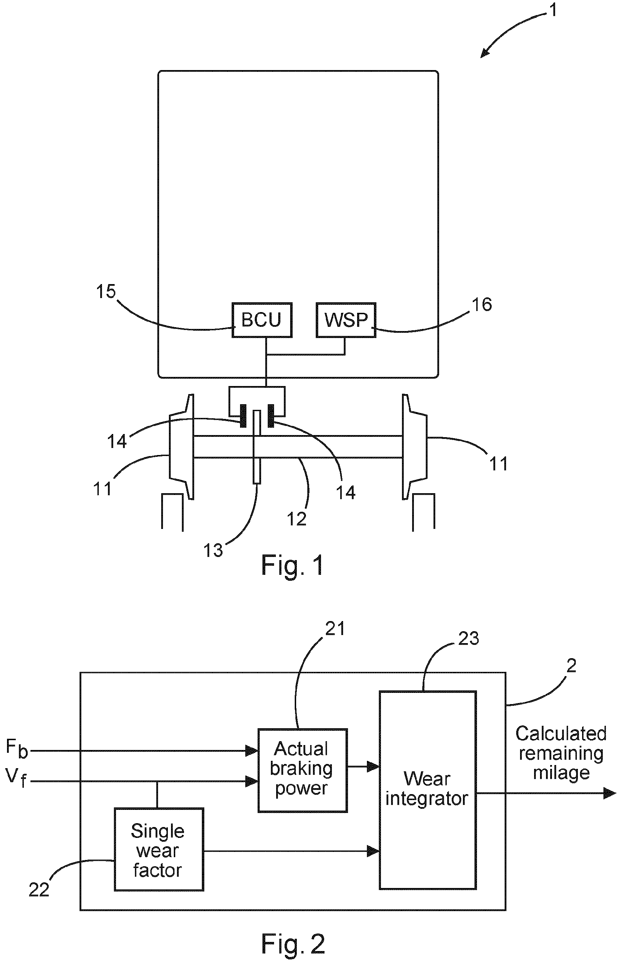

Referring to **Fig. 1,** a rail vehicle 1 comprises rail bound wheels 11 connected via an axle 12. The rail vehicle 1 comprises a brake system having a friction surface on a friction disc 13, wherein the braking disc is fixed to the axle 12 in a manner that the brake disc 13 is forced to rotate together with the axle 12 such that the brake disc 13 rotates with respect to the rail vehicle 1 when the rail vehicle's velocity in the rail vehicle's intended moving directions is greater than 0, and brake pads 14 that are fixed in the rail vehicle in a manner that they basically do not move relative to the rail vehicle such that the brake disc 13 rotates relative to the brake pads 14 and that can be applied with a force e.g. electrically, pneumatically or hydraulically such that the brake pads 14 are pressed against the brake disc 13 and exert friction between the brake pads 14 and the brake disc 13. The brake system further comprises a brake control unit 15 and a wheel slide protection unit 16 that are configured to control the force with which the brake pads 14 are pressed against the brake disc 13 and comprise computing units to calculate the appropriate forces.

The calculating units of the brake control unit 15 or the wheel slide protection unit 16 are used to calculate the wear amount of the brake pads 14.

**Fig. 2** exhibits a virtual wear calculation module 2 contained in the brake control unit 15 or the wheel slide protection unit 16. The wear calculation module 2 has as input a force $F_b$ that represents the normal force exerted between the brake disc 13 and the brake pads 14, and a velocity $V_f$ that represents the relative velocity between the brake disc 13 and the brake pads 14. The wear calculation module 2 contains a braking power determination unit 21 that takes $F_b$ and $V_f$ as an input and calculates and outputs an actual braking power $P(t)$. The actual braking power is calculated such:

$$P(t) = \mu_{pd}(v, T_s, F_b) \cdot F_b \cdot v$$

wherein:

P(t): the actual brake power dissipated in the brake pad/disc system

$\mu_{pd}$: the braking pad/disc friction coefficient as a function of the velocity, disc surface temperature and brake pad/disc normal force

v: relative velocity between brake disc and brake pads, $= V_f$

$F_b$: normal force exerted between brake disc and brake pads.

As it can be seen from the above calculation, the friction coefficient varies on changes in speed, temperature and brake pressure. Corresponding values are provided by brake pad manufacturers.

The wear calculation module 2 comprises a stored value as a single wear factor 22 set by an operator in correspondence to the train operation type and a wear integrator unit 23. The wear integrator unit 23 has as input the actual braking power P(t) from the braking power determination unit 21 and the wear factor 22 and calculates the wear W(t) of the brake pads 13. The wear amount W(t) up to a time instant t is computed such:

$$W(t) = \int_{t0}^{t} P(t) \cdot w(T, F_b, v) d\tau$$

wherein:

W(t)        Wear amount up to time instant t

P(t)        the actual braking power dissipated in the brake pad/disc system

$w(T, F_b, v)$    wear coefficent

The wear coefficient $w(T, F_b, v)$ may be provided in polynomial form, i.e in the reference paper of as a lookup table.

The wear integrator unit 23 outputs a calculated remaining mileage dependent on the calculated wear amount W(t).

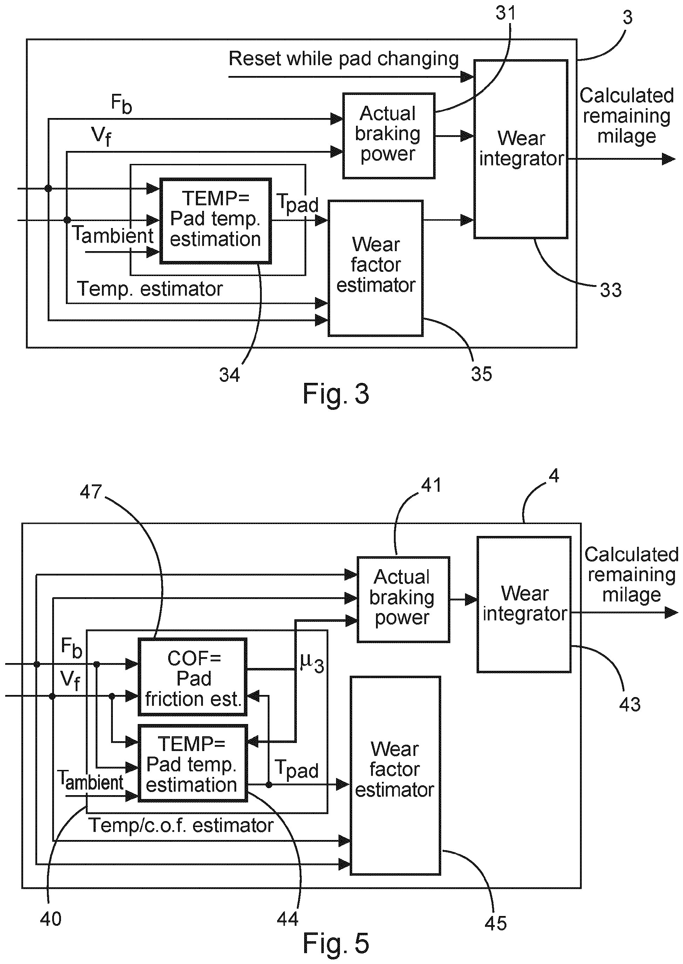

**Fig. 3** exhibits a virtual wear calculation module 3 that is a modification of the wear calculation module 2. The wear calculation module 3 comprises the inputs and outputs of the wear calculation module 2 and a braking power determination unit 31 and a wear integrator unit 33 that correspond to the braking power determination unit 21 and a wear integrator unit 23, respectively. In addition, the wear calcuation module 3 comprises a pad temperature estimation unit 34. It takes $F_b$, $V_f$ and $T_{ambient}$ as an ambient temperature as an input and calculates a temperature of the brake pads 13 $T_{pad}$ as an output. The brake pad temperature is calculated similarly to a brake disc temperature that is calculated as follows:

$$C_s \cdot \frac{dT_s}{dt} = \xi \cdot P(t) - \lambda \cdot (T_s - T_b) - K_s(v) \cdot (T_s - T_{env})$$

$$C_b \cdot \frac{dT_b}{dt} = \lambda \cdot (T_s - T_b) - K_b(v) \cdot (T_b - T_{env})$$

wherein:

s:    surface

b:    bulk part of the brake disc

C:    heat capacity,

$\lambda$:    heat exchange between surface and bulk

K:    heat exchange (speed dependent) between surface/bulk and environment

v:    relative speed between brake disc and brake pad

$\xi$    fraction of friction heat coming into brake disc

P(t)    brake power (see above)

The wear calculation module 3 further comprises a wear factor estimator unit 35 that takes $F_b$, $V_f$ and $T_{pad}$ as an input and calculates a wear coefficient $w_{factorised}$ as an output. To consider temperatues above the *"maximal continous application temperature"* and below the *"maximal short time application temperature"*, $w_{factorised}$ is calculated as follows:

$$w_{factorised} = w_{prelife} * w(T, F_b, v)$$

The factor wprelife accounts for the fact that due to the increased temperature, wear is increased at least for a specific duration. In this temperature envelope, the layer affected by the elevated temperatures is thin enough to wear down within a predetermined amount of wear energy on temperatures below the *"maximal continous application temperature"*. The duration of removal of the affected brake pad material and correspondingly the duration of application of $w_{prelife}$ depends on the affected material's thickness. The value for $w_{prelife}$ and the duration of its application is stored in a tookup table as depicted below:

| exceeded temp. (°C) | below 300 | 300...350 | 350... 400 | 400...450 | above 450 |
|---|---|---|---|---|---|
| "nprelife" | 1 | 1,2 | 2 | 2,5 | 5 |
| "increased wear regime" (MJ) | n.a. | 50 | 200 | 300 | infinite |

If a brake pad temperature exeeds the demperatures defined in the above table, a wear coefficient $w_{factorised}$ considering a factor $w_{prelife}$ has to be applied in the wear calculation. This increased wear coefficient $w_{factorised}$ has to be used in the *"increased wear regime"*, i.e. it has to be used until the friction energy defined for each temperatur threshold in the above table is accumulated, causing the damaged surface layer to wear off.

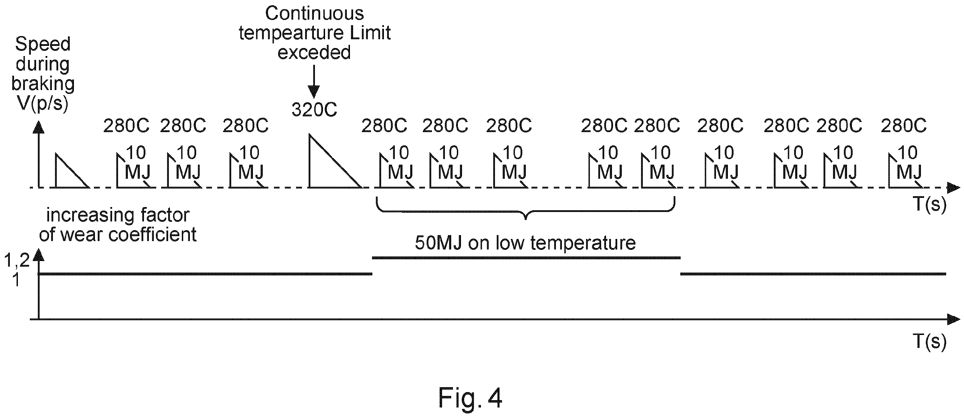

**Fig. 4** exhibits an example on application of an increased wear coefficient $w_{factorised}$. As it can be seen, 13 brake events occur having a brake energy of 10 MJ at a brake pad temperature of 280°C that do not exceed the *"maximal continous application temperature"* of 300°C. The fithe brake event, however, exceeds the *"maximal continous application temperature"* up to 320°C. According to the above table, a factor $w_{prelife}$ of 1.2 has to be applied until an accumulation of a brake energy of 50 MJ. As it can be seen, the excessive brake event is followed by 5 regular brake events not exceeding the *"maximal continous application temperature"* and amounting to a brake energy of 10 MJ each. During that time, the factor $w_{prelife}$ of 1.2 is applied. After accumulation of a brake energy of 50 MJ, no increased factor is applied.

Alternatively to a lookup table, the factor $w_{prelife}$ and corresponding brake energy values can be calculated by the wear factor estimator unit 35.

Fed by the output of the wear factor estimator unit 35, the wear integrator unit 33 calculates the wear amount *W(t)* up to a time instant *t* as follows:

$$W(t) = \int_{t0}^{t} P(t) \cdot w_{factorised}(T, F_b, v)d\tau$$

**Fig. 5** exhibits a virtual wear calculation module 4 that is a modification of the wear calculation module 3. The wear calculation module 4 comprises the inputs and outputs of the wear calculation module 3, a braking power determination unit 41, a wear integrator unit 43 and a wear factor estimator unit 45 that correspond to the braking power determination unit 21, 31, the wear integrator unit 23, 33 and the wear factor estimator unit 35, respectively. The wear calculation module 3 comprises a temperature-friction-coefficent estimator unit 46. The temperature-friction-coefficent estimator unit 46 takes $F_b$, $V_f$ and $T_{ambient}$ as inputs and provides temperature of the brake pads 13 $T_{pad}$ and a current friction coefficient $\mu_0$ as an output.

The temperature-friction-coefficent estimator unit 46 comprises a pad friction estimation unit 47 that takes $F_b$, $V_f$ and $T_{pad}$ as an input and determines the friction coefficient $\mu_0$ depending on brake force, velocity and estimated brake pad temperature. The friction coefficient $\mu_0$ is input into the braking power determination unit 41 to more accurately determine the brake power *P(t)*.

The temperature-friction-coefficent estimator unit 46 comprises a pad temperature estimation unit 44 that corresponds to the pad temperature estimation unit 34. The pad temperature estimation unit 44 additionally takes the friction coefficent $\mu_0$ as an input. Since the friction coefficent $\mu_0$ varies with brake pad temperature, this input can be used to more accurately determine $T_{pad}$.

The invention was described by means of an embodiment. The embodiment is only of explanatory nature and does not restrict the invention as defined by the claims. As recognizable by the skilled person, deviations from the embodiment are possible without leaving the invention according to the scope of the claimed subject-matter.

In this document, the terms "and", "or" and "either ... or" are used as conjunctions in a meaning similar to the logical conjunctions "AND", "OR" (often also "and/or") or "XOR", respectively. In particular, in contrast to "either ... or", the term "or" also includes occurrence of both operands.

LIST OF REFERENCE SIGNS

| | |
|---|---|
| 1 | rail vehicle |
| 11 | rail bound wheel |
| 12 | axle |
| 13 | brake disc |
| 14 | brake pad |
| 15 | brake control unit (BCU) |
| 16 | Wheel slide prevention unit (WSP) |
| 2 | wear calculation module |
| 21 | braking power determination unit |
| 22 | wear factor |
| 23 | wear integrator unit |
| 3 | wear calculation module |
| 31 | braking power determination unit |
| 33 | wear integrator unit |
| 34 | brake pad temperature estimation unit |
| 35 | wear factor estimation unit |
| 4 | wear calculation module |
| 41 | braking power determination unit |
| 43 | wear integrator unit |
| 44 | brake pad temperature estimation unit |
| 45 | wear factor estimation unit |
| 46 | temperature-friction-coefficent estimator unit |
| 47 | brake pad friction estimation unit |

**Claims**

1. A wear estimator device for an element of a friction based braking device, comprising an on-board computing capacity device (15, 16) configured to conduct arithmetic calculations and to be arranged at a vehicle, the on-board computing capacity device (15, 16) being connectable to the friction based brake device (13, 14), **characterized in that** the on-board computing capacity device (15, 16) comprises:

   a wear factor estimation unit (35, 45) that is configured to determine a wear coefficient ($w_{factorised}$) based on properties of the operational circumstances of the friction based brake device (13, 14), wherein the wear coefficient considers temperatures above the maximal continuous application temperature and below the maximal short time application temperature for the duration of removal of an affected braking device material and
   a wear integrator unit (23, 33, 43) that is configured to determine a wear *(W(t))* of an element of the brake device (13, 14) under consideration of the wear coefficient ($w_{factorised}$) determined by the wear factor estimation unit (35, 45).

2. The wear estimator device according to the preceding claim, wherein the on-board computing capacity device is a brake control unit (15) or a wheel slide prevention unit (16).

3. The wear estimator device according to any of the preceding claims, wherein the element of the brake device is a brake pad (14), a brake disc (13) or any other element holding a friction surface of a brake device.

4. The wear estimator device according to any of the preceding claims, wherein the on-board computing capacity device (15, 16) further comprises a brake element temperature estimation unit (34, 44) that is configured to determine a temperature ($T_{pad}$) of an element of the braking device (13, 14) and the wear factor estimation unit (35, 45) is configured to determine the wear coefficient ($w_{factorised}$) based on the temperature ($T_{pad}$) determined by the brake element temperature estimation unit (34, 44).

5. The wear estimator device according to any of the preceding claims, wherein the on-board computing capacity device (15, 16) further comprises a braking power determination unit (21, 31, 41) that is configured to determine a

7

braking power $P(t)$ and the wear integrator unit (23, 33, 43) is configured to determine a wear $(W(t))$ of an element of the brake device (13, 14) under consideration of the wear coefficient ($w_{factorised}$) determined by the wear factor estimation unit (35, 45) and the braking power $(P(t))$ determined by the braking power determination unit (31, 41).

6. The wear estimator device according to the preceding claim, wherein the braking power determination unit (21, 31, 41) is configured to determine the braking power $P(t)$ based on the normal force ($F_b$) applied to the elements of the friction based brake device (13, 14) or the velocity ($V_f$) of several elements (13, 14) of the brake device relative to each other.

7. The wear estimator device according to any of claims 4 to 6, wherein the wear factor estimation unit (35, 45) is configured to determine the wear coefficient ($w_{factorised}$) based on the temperature ($T_{pad}$) determined by the brake element temperature estimation unit (34, 44), the normal force ($F_b$) applied to the elements of the friction based brake device (13, 14) or the velocity ($V_f$) of the elements (13, 14) of the brake device relative to each other.

8. The wear estimator device according to any of the preceding claims, wherein the brake element temperature estimation unit (34, 44) is configured to determine the temperature ($T_{pad}$) of the element of the braking device (13, 14) based on the normal force ($F_b$) applied to the elements of the friction based brake device (13, 14), the velocity ($V_f$) of the elements of the brake device (13, 14) relative to each other, or the ambient temperature ($T_{ambient}$).

9. The wear estimator device according to any of the preceding claims, wherein the on-board computing capacity device (15, 16) further comprises a temperature-friction-coefficent estimator unit (46) and the temperature-friction-coefficent estimator unit (46) comprises

   a brake element temperature estimation unit (34, 44) and
   a brake element friction estimation unit (47) that is configured to determine a current friction coefficient ($\mu_0$) of the elements of the brake device (13, 14),
   wherein the brake element temperature estimation unit (34, 44) is configured to determine the temperature ($T_{pad}$) of the element of the braking device (13, 14) based on the normal force ($F_b$) applied to the elements of the friction based brake device (13, 14), the velocity ($V_f$) of the elements of the brake device (13, 14) relative to each other, the ambient temperature ($T_{ambient}$), or the current friction coefficient ($\mu_0$) of the elements of the brake device (13, 14), or
   a braking power determination unit (21, 31, 41) is configured to determine the braking power $P(t)$ based on the normal force ($F_b$) applied to the elements of the friction based brake device (13, 14), the velocity ($V_f$) of several elements (13, 14) of the brake device relative to each other, or the current friction coefficient ($\mu_0$) of the elements of the brake device (13, 14).

10. A vehicle comprising the wear estimator device of any of the preceding claims.

11. A wear estimator method for an element of a friction based braking device, the method comprising the steps:

   determining a wear coefficent ($w_{factorised}$) based on properties of the operational circumstances of the friction based brake device (13, 14) and
   determining a wear $(W(t))$ of an element of the brake device (13, 14) under consideration of the wear coefficient ($w_{factorised}$) determined by the wear factor estimation unit (35, 45) wherein the wear coefficient considers temperatures above the maximal continuous application temperature and below the maximal short time application temperature for the duration of removal of an affected braking device material,
   wherein the method steps are accomplished by an on-board computing capacity device (15, 16) configured to conduct arithmetic calculations and to be arranged at a vehicle, the on-board computing capacity device (15, 16) being connectable to the friction based brake device (13, 14).

12. The wear estimator method according to the previous claim, further comprising the step:

   determining a temperature ($T_{pad}$) of an element of the braking device (13, 14),
   wherein the wear coefficient ($w_{factorised}$) determination is based on the temperature ($T_{pad}$).

13. The wear estimator method according to any of the previous claim 11 or 12, further comprising the step:

   determining a braking power $P(t)$ of the brake device (13, 14),

wherein the determination of a wear *(W(t))* of the element of the brake device (13, 14) is applied under consideration of the wear coefficient ($w_{factorised}$) determined in the wear factor estimation step (35, 45) and the braking power *(P(t))* determined in the braking power determination step.

14. The wear estimator method according to claims 12 and 13, further comprising the step:

determining a brake element friction coefficient ($\mu_0$) of the elements of the brake device (13, 14), wherein the brake element temperature estimation step determines the temperature ($T_{pad}$) of the element of the braking device (13, 14) based on the normal force ($F_b$) applied to the elements of the friction based brake device (13, 14), the velocity ($V_f$) of the elements of the brake device (13, 14) relative to each other, the ambient temperature ($T_{ambient}$), or the current friction coefficient ($\mu_0$) of the elements of the brake device (13, 14), or the braking power determination step determines the braking power *P(t)* based on the normal force ($F_b$) applied to the elements of the friction based brake device (13, 14), the velocity ($V_f$) of several elements (13, 14) of the brake device relative to each other, or the current friction coefficient ($\mu_0$) of the elements of the brake device (13, 14).

## Patentansprüche

1. Verschleißschätzvorrichtung für ein Element einer reibungsbasierten Bremsvorrichtung, mit einer bordeigenen Rechenkapazitätsvorrichtung (15, 16), die dazu ausgelegt ist, arithmetische Berechnungen durchzuführen und an einem Fahrzeug angeordnet zu werden, wobei die bordeigene Rechenkapazitätsvorrichtung (15, 16) mit der reibungsbasierten Bremsvorrichtung (13, 14) verbindbar ist, **dadurch gekennzeichnet, dass** die bordeigene Rechenkapazitätsvorrichtung (15, 16) umfasst:

eine Verschleißfaktorschätzeinheit (35, 45), die dazu ausgelegt ist, einen Verschleißkoeffizienten ($W_{faktorisiert}$) basierend auf Eigenschaften der Betriebsbedingungen der reibungsbasierten Bremsvorrichtung (13, 14) zu bestimmen, wobei der Verschleißkoeffizient Temperaturen oberhalb der maximalen Dauerbetätigungstemperatur und unterhalb der maximalen Kurzzeitbetätigungstemperatur für die Dauer der Entfernung eines betreffenden Bremsvorrichtungsmaterials berücksichtigt, und eine Verschleißintegratoreinheit (23, 33, 43), die dazu ausgelegt ist, einen Verschleiß *(W(t))* eines Elements der Bremsvorrichtung (13, 14) unter Berücksichtigung des durch die Verschleißfaktorschätzeinheit (35, 45) bestimmten Verschleißkoeffizienten ($W_{faktorisiert}$) zu bestimmen.

2. Verschleißschätzvorrichtung gemäß dem vorhergehenden Anspruch, wobei die bordeigene Rechenkapazitätsvorrichtung eine Bremssteuereinheit (15) oder eine Schlupfverhinderungseinheit (16) ist.

3. Verschleißschätzvorrichtung gemäß einem der vorhergehenden Ansprüche, wobei das Element der Bremsvorrichtung ein Bremsbelag (14), eine Bremsscheibe (13) oder ein anderes Element ist, das eine Reibfläche einer Bremsvorrichtung hält.

4. Verschleißschätzvorrichtung gemäß einem der vorhergehenden Ansprüche, wobei die bordeigene Rechenkapazitätsvorrichtung (15, 16) ferner eine Bremselementtemperaturschätzeinheit (34, 44) umfasst, die dazu ausgelegt ist, eine Temperatur ($T_{Belag}$) eines Elements der Bremsvorrichtung (13, 14) zu bestimmen, und die Verschleißfaktorschätzeinheit (35, 45) dazu ausgelegt ist, den Verschleißkoeffizienten ($W_{faktorisiert}$) basierend auf der durch die Bremselementtemperaturschätzeinheit (34, 44) bestimmten Temperatur ($T_{Belag}$) zu bestimmen.

5. Verschleißschätzvorrichtung gemäß einem der vorhergehenden Ansprüche, wobei die bordeigene Rechenkapazitätsvorrichtung (15, 16) ferner eine Bremsleistungsbestimmungseinheit (21, 31, 41) umfasst, die zum Bestimmen einer Bremsleistung *P(t))* ausgelegt ist, und die Verschleißintegratoreinheit (23, 33, 43) dazu ausgelegt ist, einen Verschleiß *(W(t))* eines Elements der Bremsvorrichtung (13, 14) unter Berücksichtigung des durch die Verschleißfaktorschätzeinheit (35, 45) bestimmten Verschleißkoeffizienten ($W_{faktorisiert}$) und der durch die Bremsleistungsbestimmungseinheit (31, 41) bestimmten Bremsleistung *(P(t))* zu bestimmen.

6. Verschleißschätzvorrichtung gemäß dem vorhergehenden Anspruch, wobei die Bremsleistungsbestimmungseinheit (21, 31, 41) dazu ausgelegt ist, die Bremsleistung *P(t)* basierend auf der auf die Elemente der reibungsbasierten Bremsvorrichtung (13, 14) ausgeübten Normalkraft ($F_b$) oder der Geschwindigkeit ($V_t$) mehrerer Elemente (13, 14) der Bremsvorrichtung relativ zueinander zu bestimmen.

**7.** Verschleißschätzvorrichtung gemäß einem der Ansprüche 4 bis 6, wobei die Verschleißfaktorschätzeinheit (35, 45) dazu ausgelegt ist, den Verschleißkoeffizienten ($W_{faktorisiert}$) basierend auf der durch die Bremselementtemperaturschätzeinheit (34, 44) bestimmten Temperatur ($T_{Belag}$), der auf die Elemente der reibungsbasierten Bremsvorrichtung (13, 14) ausgeübten Normalkraft ($F_b$) oder der Geschwindigkeit ($V_t$) der Elemente (13, 14) der Bremsvorrichtung relativ zueinander zu bestimmen.

**8.** Verschleißschätzvorrichtung gemäß einem der vorhergehenden Ansprüche, wobei die Bremselementtemperaturschätzeinheit (34, 44) dazu ausgelegt ist, die Temperatur ($T_{Belag}$) des Elements der Bremsvorrichtung (13, 14) basierend auf der auf die Elemente der reibungsbasierten Bremsvorrichtung (13, 14) ausgeübten Normalkraft ($F_b$), der Geschwindigkeit ($V_t$) der Elemente der Bremsvorrichtung (13, 14) relativ zueinander oder der Umgebungstemperatur ($T_{Umgebung}$) zu bestimmen.

**9.** Verschleißschätzvorrichtung gemäß einem der vorhergehenden Ansprüche, wobei die bordeigene Rechenkapazitätsvorrichtung (15, 16) ferner eine Temperatur-Reibungskoeffizienten-Schätzeinheit (46) umfasst und die Temperatur-Reibungskoeffizienten-Schätzeinheit (46) Folgendes umfasst:

eine Bremselementtemperaturschätzeinheit (34, 44) und
eine Bremselementreibungsschätzeinheit (47), die dazu ausgelegt ist, einen aktuellen Reibungskoeffizienten ($\mu_0$) der Elemente der Bremsvorrichtung (13, 14) zu bestimmen,
wobei die Bremselementtemperaturschätzeinheit (34, 44) dazu ausgelegt ist, die Temperatur ($T_{Belag}$) des Elements der Bremsvorrichtung (13, 14) basierend auf der auf die Elemente der reibungsbasierten Bremsvorrichtung (13, 14) ausgeübten Normalkraft ($F_b$), der Geschwindigkeit ($V_t$) der Elemente der Bremsvorrichtung (13, 14) relativ zueinander, der Umgebungstemperatur ($T_{Umgebung}$) oder dem aktuellen Reibungskoeffizienten ($\mu_0$) der Elemente der Bremsvorrichtung (13, 14) zu bestimmen, oder
eine Bremsleistungsbestimmungseinheit (21, 31, 41), die dazu ausgelegt ist, die Bremsleistung $P(t)$ basierend auf der auf die Elemente der reibungsbasierten Bremsvorrichtung (13, 14) ausgeübten Normalkraft ($F_b$), der Geschwindigkeit ($V_t$) mehrerer Elemente (13, 14) der Bremsvorrichtung relativ zueinander oder dem aktuellen Reibungskoeffizienten ($\mu_0$) der Elemente der Bremsvorrichtung (13, 14) zu bestimmen.

**10.** Fahrzeug mit der Verschleißschätzvorrichtung gemäß einem der vorhergehenden Ansprüche.

**11.** Verschleißschätzverfahren für ein Element einer reibungsbasierten Bremsvorrichtung, wobei das Verfahren die folgenden Schritte umfasst:

Bestimmen eines Verschleißkoeffizienten ($W_{faktorisiert}$) basierend auf Eigenschaften der Betriebsbedingungen der reibungsbasierten Bremsvorrichtung (13, 14) und
Bestimmen eines Verschleißes *(W(t))* eines Elements der Bremsvorrichtung (13, 14) unter Berücksichtigung des durch die Verschleißfaktorschätzeinheit (35, 45) bestimmten Verschleißkoeffizienten ($W_{faktorisiert}$), wobei der Verschleißkoeffizient Temperaturen oberhalb der maximalen Dauerbetätigungstemperatur und unterhalb der maximalen Kurzzeitbetätigungstemperatur für die Dauer der Entfernung eines betreffenden Bremsvorrichtungsmaterials berücksichtigt,
wobei die Verfahrensschritte durch eine bordeigene Rechenkapazitätsvorrichtung (15, 16) durchgeführt werden, die zum Durchführen von arithmetischen Berechnungen ausgelegt und an einem Fahrzeug angeordnet ist, wobei die bordeigene Rechenkapazitätsvorrichtung (15, 16) mit der reibungsbasierten Bremsvorrichtung (13, 14) verbindbar ist.

**12.** Verschleißschätzverfahren gemäß dem vorhergehenden Anspruch, ferner umfassend den folgenden Schritt:

Bestimmen einer Temperatur *($T_{Belag}$)* eines Elements der Bremsvorrichtung (13, 14),
wobei das Bestimmen des Verschleißkoeffizienten ($W_{faktorisiert}$) auf der Temperatur *($T_{Belag}$)* basiert.

**13.** Verschleißschätzverfahren gemäß einem des vorhergehenden Anspruchs 11 oder 12, ferner umfassend den folgenden Schritt:

Bestimmen einer Bremsleistung *P(t)* der Bremsvorrichtung (13, 14),
wobei die Bestimmung eines Verschleißes *(W(t))* des Elements der Bremsvorrichtung (13, 14) unter Berücksichtigung des im Verschleißfaktorschätzschritt (35, 45) bestimmten Verschleißkoeffizienten ($w_{faktorisiert}$) und der im Bremsleistungsbestimmungsschritt bestimmten Bremsleistung *(P(t))* erfolgt.

**14.** Verschleißschätzverfahren gemäß Anspruch 12 und 13, ferner umfassend den folgenden Schritt:

Bestimmen eines Bremselementreibungskoeffizienten $(\mu_0)$ der Elemente der Bremsvorrichtung (13, 14), wobei der Bremselementtemperaturschätzschritt die Temperatur $(T_{Belag})$ des Elements der Bremsvorrichtung (13, 14) basierend auf der auf die Elemente der reibungsbasierten Bremsvorrichtung (13, 14) ausgeübten Normalkraft $(F_b)$, der Geschwindigkeit $(V_t)$ der Elemente der Bremsvorrichtung (13, 14) relativ zueinander, der Umgebungstemperatur $(T_{Umgebung})$ oder dem aktuellen Reibungskoeffizienten $(\mu_0)$ der Elemente der Bremsvorrichtung (13, 14) bestimmt, oder
der Bremsleistungsbestimmungsschritt die Bremsleistung $P(t)$ basierend auf der auf die Elemente der reibungsbasierten Bremsvorrichtung (13, 14) ausgeübten Normalkraft $(F_b)$, der Geschwindigkeit $(V_t)$ mehrerer Elemente (13, 14) der Bremsvorrichtung relativ zueinander oder dem aktuellen Reibungskoeffizienten $(\mu_0)$ der Elemente der Bremsvorrichtung (13, 14) bestimmt.

**Revendications**

**1.** Dispositif d'estimation d'usure d'un élément d'un dispositif de freinage reposant sur le frottement, comprenant un dispositif (15, 16) embarqué à capacité informatique configuré pour effectuer des calculs arithmétiques et pour être mis sur un véhicule, le dispositif (15, 16) embarqué à capacité informatique pouvant être connecté au dispositif (13, 14) de frein reposant sur le frottement,
**caractérisé en ce que** le dispositif (15, 16) embarqué à capacité informatique comprend :

une unité (35, 45) d'estimation d'un facteur d'usure, qui est configurée pour déterminer un coefficient ($w_{factorised}$) d'usure basé sur des propriétés des circonstances de fonctionnement du dispositif (13, 14) de frein reposant sur le frottement, dans lequel le coefficient d'usure considère des températures au-dessus de la température maximum d'application continue et en-dessous de la température maximum d'application brève pendant la durée d'élimination d'un matériau affecté du dispositif de freinage, et
une unité (23, 33, 43) d'intégration d'usure, qui est configurée pour déterminer une usure ($W(t)$) d'un élément du dispositif (13, 14) de frein en considération du coefficient ($w_{factorised}$) d'usure déterminé par l'unité (35, 45) d'estimation du facteur d'usure.

**2.** Dispositif d'estimation d'usure suivant la revendication précédente, dans lequel le dispositif embarqué à capacité informatique est une unité (15) de commande de frein ou une unité (16) de prévention d'un glissement de roue.

**3.** Dispositif d'estimation d'usure suivant l'une quelconque des revendications précédentes, dans lequel l'élément du dispositif de frein est une plaquette (14) de frein, un disque (13) de frein ou tout autre élément supportant une surface de frottement d'un dispositif de frein.

**4.** Dispositif d'estimation d'usure suivant l'une quelconque des revendications précédentes, dans lequel le dispositif (15, 16) embarqué à capacité informatique comprend en outre une unité (34, 44) d'estimation d'une température d'un élément de frein, qui est configurée pour déterminer une température ($T_{pad}$) d'un élément du dispositif (13, 14) de freinage et l'unité (35, 45) d'estimation d'un facteur d'usure est configurée pour déterminer le coefficient ($w_{factorised}$) d'usure sur la base de la température ($T_{pad}$) déterminée par l'unité (34, 44) d'estimation de la température d'un élément de frein.

**5.** Dispositif d'estimation d'usure suivant l'une quelconque des revendications précédentes, dans lequel le dispositif (15, 16) embarqué à capacité informatique comprend en outre une unité (21, 31, 41) de détermination d'une puissance de freinage, qui est configurée pour déterminer une puissance $P(t)$ de freinage et l'unité (23, 33, 43) d'intégration d'usure est configurée pour déterminer une usure ($W(t)$) d'un élément du dispositif (13, 14) de frein en considération du coefficient ($w_{factorised}$) d'usure déterminé par l'unité (35, 45) d'estimation du facteur d'usure et de la puissance $(P(t))$ déterminée par l'unité (31, 41) de détermination d'une puissance de freinage.

**6.** Dispositif d'estimation d'usure suivant la revendication précédente, dans lequel l'unité (21, 31, 41) de détermination d'une puissance de freinage est configurée pour déterminer la puissance $P(t)$ de freinage sur la base de la force ($F_b$) normale appliquée aux éléments du dispositif (13, 14) de frein reposant sur le frottement ou de la vitesse ($V_\varepsilon$) de plusieurs éléments (13, 14) du dispositif de frein les uns par rapport aux autres.

**7.** Dispositif d'estimation d'usure suivant l'une quelconque des revendications 4 à 6, dans lequel l'unité (35, 45) d'estimation d'un facteur d'usure est configurée pour déterminer le coefficient ($w_{factorised}$) d'usure sur la base de la température ($T_{pad}$) déterminée par l'unité (34, 44) d'estimation de la température d'un élément de frein, de la force ($F_b$) normale appliquée aux éléments du dispositif (13, 14) de frein reposant sur le frottement ou de la vitesse ($V\varepsilon$) de plusieurs éléments (13, 14) du dispositif de frein les uns par rapport aux autres.

8. Dispositif d'estimation d'usure suivant l'une quelconque des revendications précédentes, dans lequel l'unité (34, 44) d'estimation de la température d'un élément de frein est configurée pour déterminer la température ($T_{pad}$) de l'élément du dispositif (13, 14) de freinage sur la base de la force ($F_b$) normale appliquée aux éléments du dispositif (13, 14) de frein reposant sur le frottement, de la vitesse ($V\varepsilon$) des éléments du dispositif (13, 14) de frein les uns par rapport aux autres ou de la température ($T_{ambient}$) ambiante.

9. Dispositif d'estimation d'usure suivant l'une quelconque des revendications précédentes, dans lequel le dispositif (15, 16) embarqué à capacité informatique comprend en outre une unité (46) d'estimation d'un coefficient température - frottement et l'unité (46) d'estimation d'un coefficient - frottement comprend

    une unité (34, 44) d'estimation de la température d'un élément de frein, et
    une unité (47) d'estimation du frottement d'un élément de frein, qui est configurée pour déterminer un coefficient ($\mu_0$) de frottement en cours des éléments du dispositif (13, 14) de frein,
    dans lequel l'unité (34, 44) d'estimation de la température d'un élément de frein est configurée pour déterminer la température ($T_{pad}$) de l'élément du dispositif (13, 14) de freinage sur la base de la force ($F_b$) normale appliquée aux éléments du dispositif (13, 14) de frein reposant sur le frottement, de la vitesse ($V_f$) des éléments du dispositif (13, 14) de frein les uns par rapport aux autres, de la température ($T_{ambient}$) ambiante ou du coefficient ($\mu_0$) de frottement en cours des éléments du dispositif (13, 14) de frein, ou
    une unité (21, 31, 41) de puissance de freinage est configurée pour déterminer la puissance $P(t)$ de freinage sur la base de la force ($F_b$) normale appliquée aux éléments du dispositif (13, 14) de frein reposant sur le frottement, de la vitesse ($V\varepsilon$) des plusieurs éléments (13, 14) du dispositif de frein les uns par rapport aux autres ou du coefficient ($\mu_0$) de frottement en cours des éléments du dispositif (13, 14) de frein.

10. Véhicule comprenant le dispositif d'estimation d'usure suivant l'une quelconque des revendications précédentes.

11. Procédé d'estimation de l'usure d'un élément d'un dispositif de freinage reposant sur le frottement, le procédé comprenant les stades dans lesquels :

    on détermine un coefficient ($w_{factorised}$) d'usure sur la base des propriétés des circonstances de fonctionnement du dispositif (13, 14) de frein reposant sur le frottement, et
    on détermine une usure ($W(t)$) d'un élément du dispositif (13, 14) de frein en considération du coefficient ($w_{factorised}$) d'usure déterminé par l'unité (35, 45) d'estimation d'un facteur d'usure, dans lequel le coefficient d'usure considère des températures au-dessus de la température maximum d'application continue et en-dessous de la température maximum d'application brève pendant la durée de l'élimination d'un matériau affecté du dispositif de freinage,
    dans lequel les stades du procédé sont effectués par un dispositif (15, 16) embarqué à capacité informatique configuré pour effectuer des calculs arithmétiques et pour être monté sur un véhicule, le dispositif (15, 16) embarqué à capacité informatique pouvant être connecté au dispositif (13, 14) de frein reposant sur le frottement.

12. Procédé d'estimation de l'usure suivant la revendication précédente, comprenant en outre le stade de :

    détermination d'une température ($T_{pad}$) d'un élément du dispositif (13, 14) de freinage,
    dans lequel la détermination du coefficient ($w_{factorised}$) d'usure est basée sur la température ($T_{pad}$).

13. Procédé d'estimation de l'usure suivant l'une quelconque des revendications 11 ou 12 précédentes, comprenant en outre le stade de :

    détermination d'une puissance $P(t)$ de freinage du dispositif (13, 14) de frein,
    dans lequel la détermination d'une usure ($W(t)$) de l'élément du dispositif (13, 14) de frein est appliquée en considération du coefficient ($w_{factorised}$) d'usure déterminé dans le stade (35, 45) d'estimation du facteur d'usure et de la puissance ($P(t)$) de freinage déterminée dans le stade de détermination d'une puissance de freinage.

14. Procédé d'estimation de l'usure suivant les revendications 12 et 13, comprenant en outre le stade :

détermination d'un coefficient ($\mu_0$) de frottement d'un élément de frein des éléments du dispositif (13, 14) de frein, dans lequel le stade d'estimation de la température d'un élément de frein détermine la température ($T_{pad}$) de l'élément du dispositif (13, 14) de freinage sur la base de la force ($F_b$) normale appliquée aux éléments du dispositif (13, 14) de frein reposant sur le frottement, de la vitesse ($V\varepsilon$) des éléments du dispositif (13, 14) de frein les uns par rapport aux autres, de la température ($T_{ambient}$) ambiante ou du coefficient ($\mu_0$) de frottement en cours des éléments du dispositif (13, 14) de frein, ou

le stade de détermination d'une puissance de freinage détermine la puissance $P(t)$ de freinage sur la base de la force ($F_b$) normale appliquée aux éléments du dispositif (13, 14) de frein reposant sur le frottement, de la vitesse ($V_f$) des plusieurs éléments (13, 14) du dispositif de frein les uns par rapport aux autres ou du coefficient ($\mu_0$) de frottement en cours des éléments du dispositif (13, 14) de frein.

Fig. 1

Fig. 2

Fig. 3

Fig. 5

Fig. 4

EP 3 960 557 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102016115275 A1
- DE 102018117082 A1